# EUROPÄISCHE PATENTSCHRIFT

(11) **EP 1 754 410 B1**
(45) Veröffentlichungstag und Bekanntmachung des Hinweises auf die Patenterteilung: **07.05.2008**
(21) Anmeldenummer: 06015101.6
(22) Anmeldetag: 20.07.2006
(51) Int. Cl.: A01G 9/14

(54) **Gewächshaus**
Greenhouse
Serre

(30) Priorität: 18.08.2005 DE 102005039443
(43) Veröffentlichungstag der Anmeldung: 21.02.2007
(73) Patentinhaber: Forschungszentrum Jülich GmbH, 52425 Jülich (DE)
(72) Erfinder: Reisinger, Gerhard, 89257 Illertissen (DE)

(56) Entgegenhaltungen:
- DE-A1- 19 637 778
- FR-A1- 2 803 168
- NL-C2- 1 003 566
- NL-C2- 1 016 150

## Beschreibung

Die Erfindung betrifft ein Gewächshaus.

Gewächshäuser für den geschützten Anbau von Pflanzen oder andere vergleichbare Gebäude, z. B. zur Tierhaltung, Pflanzenschauhaus, Verkaufsanlage oder Freizeiteinrichtung, mit sowohl transparenter als auch nichttransparenter Eindeckung und großflächigen Lüftungsklappen im Dachbereich werden in vielfältigen Bauweisen ausgeführt. So sind beispielsweise so genannte "Venlogewächshäuser" bekannt, die einen internen, gitterbinderartigen Tragrahmen aufweisen, auf dem viele kleine Dachkappen aufliegen. Teilflächen der Dachkappen sind als Lüftungsklappen ausgeführt. Weiterhin bekannt sind so genannte "Breitschiffhäuser" mit einer Dachkonstruktion aus einem Dreieckrahmen und beidseitig durchgehenden Firstlüftungen. Im südlichen Europa werden vorwiegend Foliengewächshäuser eingesetzt. Die Konstruktionsweise ist dabei nicht einheitlich und für die Eindeckung stehen eine Vielzahl unterschiedlicher Folien zur Verfügung.

Hohe Transparenz, gute Lüftbarkeit und ausreichende Stabilität und wirtschaftliche Betriebsweise sind die primären Forderungen an eine Gewächshauskonstruktion. Um die Transparenz der Hüllfläche zu steigern, werden unterschiedliche Glasqualitäten, Folien und Kunststoffplatten eingesetzt, die jeweils unterschiedliche Anforderungen an die Unterkonstruktion stellen.

Der Absatzmarkt für die Pflanzen verlangt zunehmend eine Steigerung der Pflanzenqualität, wobei das Kulturraumklima eine zunehmende Bedeutung erhält. Auch für die zunehmende "biologische Produktion" ohne chemischen Pflanzenschutz ist ein optimales Kulturraumklima für den wirtschaftlichen Erfolg unverzichtbar. Im windreichen Küstenbereich ist dabei eine kleine Lüftungsfläche (LF) in Bezug zur Grundfläche (GF) für ein ausreichendes Kulturraumklima oft noch ausreichend. Im kontinentalen Bereich steigt die Bedeutung des Verhältnisses von LF/GF für das Kulturraumklima im Sommer stark an. Aus produktionstechnischen Gründen werden zunehmend breitere "Schiffe" gefordert, um die Anzahl der störenden Stützen (Binderstiele) im Innenraum zu minimieren. Aktuell ist bei großen Neubauprojekten beispielsweise die Schiffbreite von 12,8 Meter vorherrschend, da die internen Transporteinrichtungen der meisten Anbieter auf dieses Maß abgestimmt sind.
Bei der Venlo-Konstruktion kann diese Abmessung problemlos realisiert werden, da das Gitterbinderkonzept hierfür ideal geeignet ist. Nachteilig ist hierbei jedoch die Lüftbarkeit dieser Konzeption. Mit vertretbarem Aufwand kann eine LF/GF- Wert von 20 % erreicht werden. Ist eine höhere Lüftungswirkung erforderlich, dann kann dieser Wert zwar auf ca. 50 % bei den üblichen Bauweisen gesteigert werden. Bei sogenannten Cabrio-Lösungen sind sogar Werte bis 90 % möglich, doch dies erfordert einen stark zunehmenden technischen Aufwand, vermindert dabei die Transparenz und erhöht die Undichtigkeit der Hüllfläche und damit den Energiebedarf.

Breitschiffgewächshäuser bieten einen großen, vorteilhaften internen Luftraum in Verbindung mit einer guten Lüftungswirkung. Da die Breite der Lüftungsklappen jedoch aus Kostengründen nicht beliebig verbreitert werden kann, nimmt jedoch der Vorteil der guten Lüftungswirkung mit zunehmender Schiffbreite stark ab. Für eine gute Transparenz vor allem in den lichtschwachen Morgen- und Abendstunden und im Winter wäre eine Dachneigung mit ca. 30° günstig. Eine Vergrößerung der Schiffbreite führt zu einer stark zunehmenden Bauhöhe und damit zu einer stark ansteigenden Windlast.

Der spezifische Materialaufwand des Breitschiffhauses liegt systembedingt deutlich über der Venlo-Bauweise. Beide Konstruktionen können nur bedingt mit unterschiedlichen Eindeckmaterialien ausgestattet werden. Vor allem die Eindeckung mit neuen, hochwertigen Folien, die teilweise nur in einer Breite von unter 2 Metern gefertigt werden, können deshalb nur bedingt eingesetzt werden. Bei den Venlo-Gewächshäusern sind die einzelnen Lüftungsklappen für Folieneindeckungen hinderlich. Bei Breitschiffhäusern sind die Bauhöhe und die stark unterschiedlichen Windlasten im Dachbereich für die Folienmontage nachteilig. Nach dem Stand der Technik ist eine Gewächshauskonstruktion vom Typ "Climax" bekannt, bei der ein Gitterbinder in die Konstruktion vom Breitschiffgewächshaus integriert wurde. Bei diesem "Climax" Gewächshaustyp ist eine variable Eindeckung der Dachfläche durch die unterschiedliche Breite der Dachfläche und der Lüftungsfläche erschwert. Wie bereits bei den Breitschiffhäusern erläutert, kann auch bei den "Climax" Gewächshäusern eine Verbreiterung des Gewächshauses nur mit einer stark zunehmenden Bauhöhe und einer damit ansteigenden Windlast realisiert werden. Dies bedeutet einen erhöhten Materialaufwand sowie eine aufwendigere Konstruktion.

In der DE 196 37 778 A1 ist ein Gewächshaus offenbart, bei dem hochschwenkbare Teilbereiche von je zwei miteinander einen First bildenden Dachflächen, beide auch auf einander gegenüberliegenden Abschnitten in Firstrichtung gesehen voneinander unabhängig anhebbar ausgebildet sind, um eine bessere Belüftung zu bewirken.

Mit den bekannten Konstruktionen können die steigenden Anforderungen an Transparenz, Lüftung, Materialeinsparung, Vergrößerung der stützfreien Flächen, nicht erfüllt werden.

Es ist daher Aufgabe der Erfindung, ein Gewächshaus zu konstruieren, mit dem die Transparenz, die Lüftung, die Materialeinsparung und die Vergrößerung von stützfreien Flächen gegenüber den nach dem Stand der Technik bekannten Gewächshäusern verbessert werden kann.

Ausgehend vom Oberbegriff des Anspruchs 1 wird die Aufgabe erfindungsgemäß gelöst mit den im kennzeichnenden Teil des Anspruchs 1 angegebenen Merkmalen.

Mit dem erfindungsgemäßen Gewächshaus ist es nunmehr möglich, sowohl die klimatischen Bedingungen hinsichtlich Lichteinfall und Lüftung als auch die räumlichen Bedingungen hinsichtlich Vergrößerung der Nutzfläche des Gewächshauses unter Einsparung von Material zu verbessern. Mit dem erfindungsgemäßen Gewächshaus ist weiterhin eine variable Eindeckung mit allen verfügbaren Eindeckmaterialien ohne aufwendige Veränderung der Konstruktion möglich.

Vorteilhafte Weiterbildungen sind in den Unteransprüchen angegeben.
Die Zeichnungen zeigen beispielhafte Ausführungsformen des erfindungsgemäßen Gewächshauses.

Es zeigt:
- Fig. 1:: Frontansicht des erfindungsgemäßen Gewächshauses.
- Fig. 2:: Frontansicht des Gewächshauses ohne erfindungsgemäße Rahmenkonstruktion.
- Fig. 3:: Frontansicht eines Gewächshausausschnittes mit drei Dachkappen mit über die Rinnenebene hochgezogenen Binderstielen.
- Fig. 4:: Ansicht der Quer- und Längsachse des Gewächshauses.
- Fig. 5:: Frontansicht des Gewächshauses mit tonnenartig geformtem Eindeckmaterial.
- Fig. 6 bis 8:: Frontansicht des Gewächshauses mit unterschiedlich ausgestalteten Dachformen.

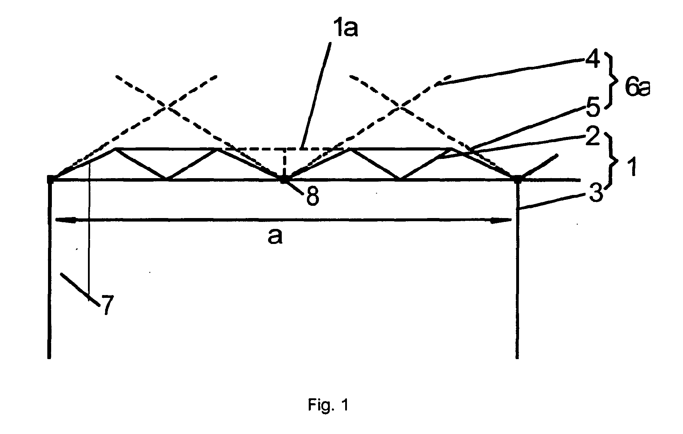

Figur 1 zeigt das erfindungsgemäße Gewächshaus mit dem tragenden Rahmen (1), der entlang der Querachse a des Gewächshauses verläuft. Der tragende Rahmen (1) setzt sich zusammen aus einem Gitterbinder (2) mit Binderstielen (3). Oberhalb des tragenden Rahmens (1) sind zwei Dachkappen (6a), bestehend aus festen Dachflächen (5) und beweglichen Lüftungsflächen (4), zu sehen. Diese Dachkappen (6a) bilden zusammen mit den Außenwandflächen (7) entlang den Binderstielen (3) die Hüllfläche. Der durch gestrichelte Linien dargestellte Bereich (1a) des tragenden Rahmens (1) oberhalb der Rinnenebene (8) ist außerhalb der Hüllfläche angeordnet.

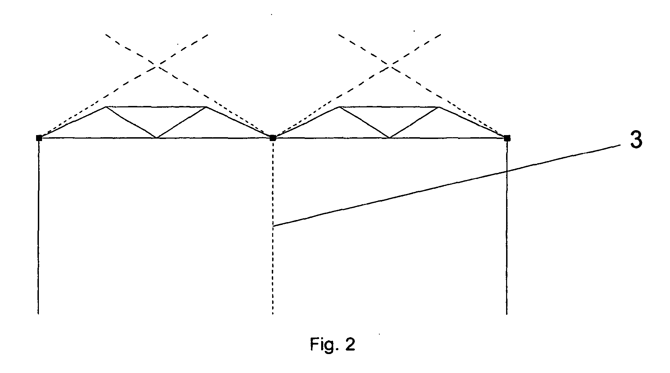

Figur 2 zeigt ein nach dem Stand der Technik bekanntes Gewächshaus ohne die erfindungsgemäße Rahmenkonstruktion. Da hier der tragende Rahmen (1) nur innerhalb der Hüllfläche angeordnet ist, ist die Anordnung eines Binderstiels (3) im Innenbereich des Gewächshauses notwendig. Der durch die gestrichelte Linie dargestellte Binderstiel (3) wird bei dem erfindungsgemäßen Gewächshaus eingespart.

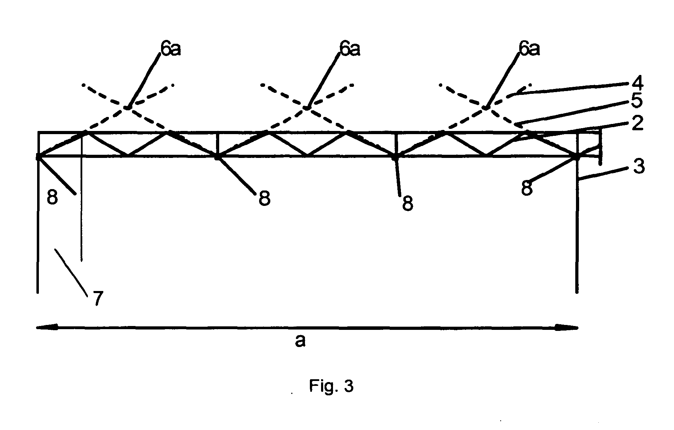

Figur 3 zeigt eine Frontansicht des erfindungsgemäßen Gewächshauses mit drei Dachkappen (6a) mit über die Rinnenebene (8) hochgezogenen Binderstielen (3). Der tragende Rahmen (1) verläuft entlang der Querachse a des Gewächshauses. Die Binderstiele (3) im Außenwandbereich (7) sind über die Rinnenebene (8) gezogen und oben mit dem Gitterbinder (2) verbunden.

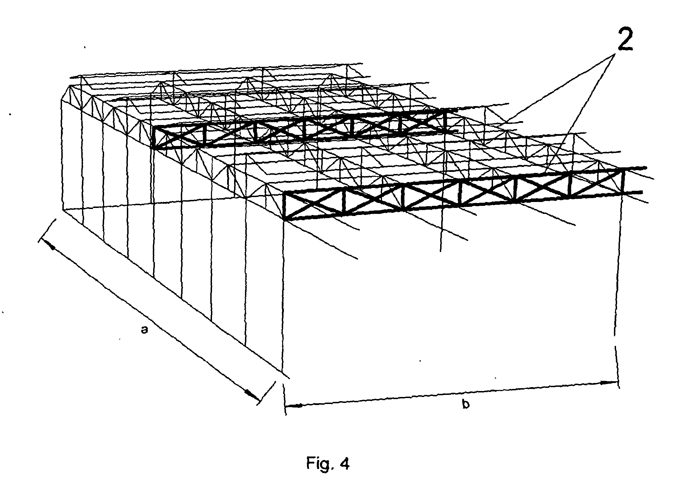

Figur 4 zeigt das erfindungsgemäße Gewächshaus mit dem Gitterbinder (2), der sowohl entlang der Querachse a als auch entlang der Längsachse b des Gewächshauses verläuft. Binderstiele (3) im Innenbereich sind gegenüber dem Stand der Technik reduziert.

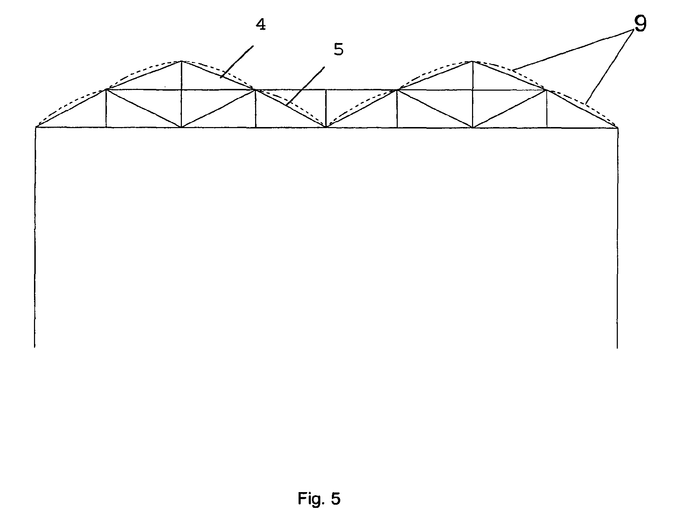

Figur 5 zeigt die Frontansicht des Gewächshauses mit tonnenartig geformtem Eindeckmaterial (9) auf der Lüftungsfläche (4) und der Dachfläche (5).

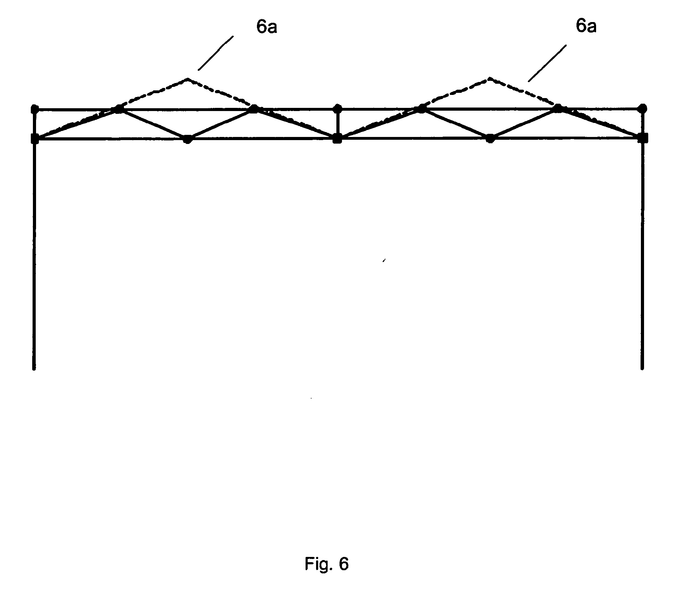

Figur 6 zeigt eine Ausgestaltung des Gewächshauses mit einer Dach- und Lüftungsneigung von ca. 40%.

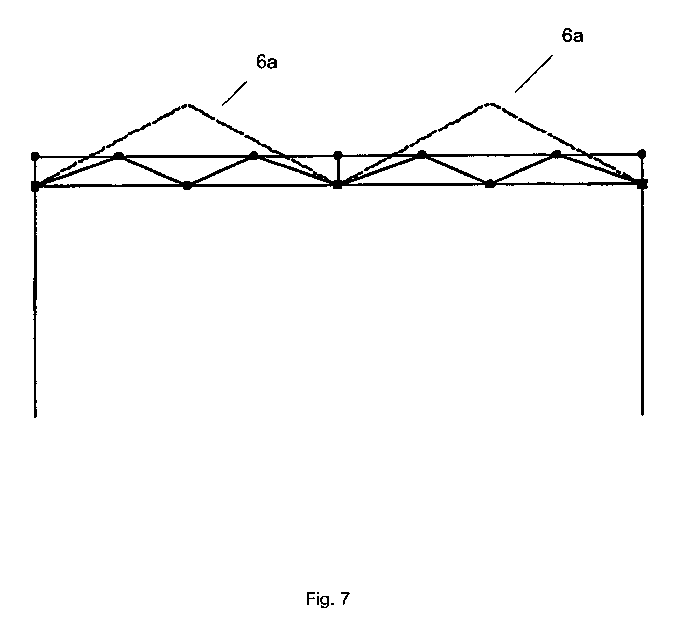

Figur 7 zeigt eine Ausgestaltung des Gewächshauses mit einer Dach- und Lüftungsneigung von ca. 50%.

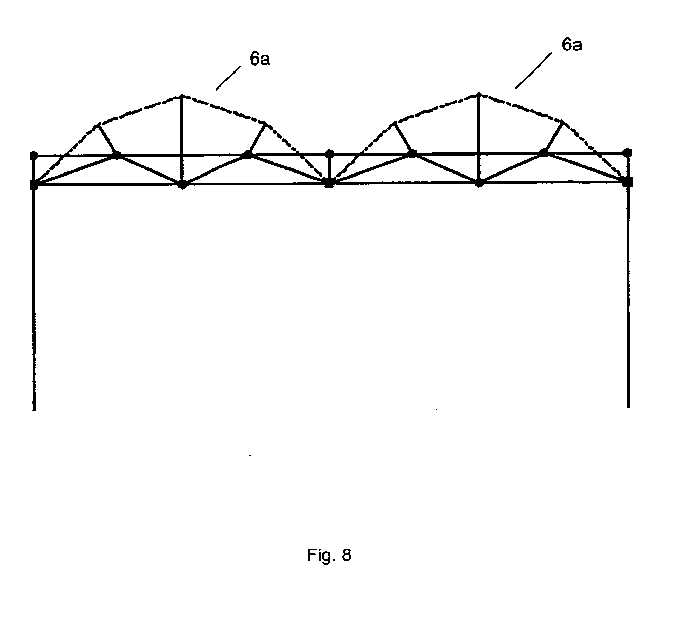

Figur 8 zeigt eine Ausgestaltung des Gewächshauses mit einer Dachneigung von ca. 50% und einer Lüftungsneigung von ca. 40%.

Das erfindungsgemäße Gewächshaus mit breitschiffartigen Dachkappen (6a), die durch einen im Dachbereich integrierten Gitterbinder (2) statisch stabilisiert sind, ist dadurch gekennzeichnet, dass ein Teil (1a) des tragende Rahmens (1), der sich oberhalb der Rinnenebene (8) befindet, außerhalb und der übrige Teil des tragenden Rahmens (1) innerhalb der Hüllfläche angeordnet ist.

Durch diese Konstruktion kann eine Verbreiterung des Gewächshauses ohne aufwendige konstruktive Stabilisierungsmaßnahmen und verminderten Materialaufwand erreicht werden. Bei den nach dem Stand der Technik bekannten Venlo-Gewächshäusern kann eine Verbreiterung aus statischen Gründen nur unter Vergrößerung der Höhe des Gitterbinders und damit der Gesamthöhe des Gewächshauses erreicht werden. Dies bedeutet eine aufwendigere Konstruktion sowie einen erhöhten Materialaufwand. Beim Breitschiffgewächshaus führt die Verbreiterung des Hauses aus statischen Gründen ebenfalls zu einer Erhöhung der Gesamthöhe des Gewächshauses. Dies bedeutet eine Erhöhung der seitlichen Windkräfte, die ebenfalls nur mit erhöhtem Materialaufwand aufgefangen werden können. Durch die Anordnung eines Teils (1a) des tragenden Rahmens (1) außerhalb der Hüllfläche können Binderstiele (3) im Innenbereich eingespart werden und durch den integrierten Gitterbinder (2) ist eine vergleichsweise Material sparende Konstruktion möglich. Bei einer Verbreiterung des Gewächshauses von beispielsweise 6,4 m auf 12,8 m sind nur die beiden äußeren Binderstiele (3) des Außenwandbereichs (7) erforderlich. Bei den bisher bekannten Gewächshäusern ist es aus statischen Gründen notwendig in der Mitte, also nach einem Abstand von 6,0 m, einen Binderstiel (3) einzusetzen (s. auch Figur 2). Dies grenzt die frei nutzbare Fläche im Innenraum ein. Mit dem erfindungsgemäßen Gewächshaus können die Abstände der Binderstiele (3) im Innenraum vergrößert werden. Dabei ist auch ein Mehrfaches der Breite der Dachkappe (6a), z. B. 3 x 6,4 m oder 4 x 6,4 m, ohne zusätzliche Zwischenstützen möglich. Dies hat eine Vergrößerung der frei nutzbaren Fläche sowie eine Materialeinsparung zur Folge. Das erfindungsgemäße Gewächshaus erfüllt durch die Kombination von Breitschiffhaus mit Gitterbinder (2), der sowohl innerhalb als auch außerhalb der Hüllfläche angeordnet ist, die Anforderung nach maximaler Transparenz und Lüftungswirkung bei minimiertem Materialeinsatz. So können beispielsweise LF/GF Werte von 50 % erreicht werden.

Durch die vorteilhafte Anordnung des tragenden Rahmens (1), der sich sowohl entlang der Querachse a des Gewächshauses, als auch entlang der Längsachse b des Gewächshauses über den Binderstielen (3) im Innenbereich als auch über der Rinnenebene (8) erstreckt, kann der Stützenabstand der Binderstiele auf ein x-faches des Binderabstands vergrößert werden. Dadurch wird eine Vergrößerung der frei nutzbaren Fläche ohne störende Binderstiele ermöglicht.

Durch die vorteilhafte Ausgestaltung der Binderstiele (3) im Außenwandbereich (7), die über die Rinnenebene (8) gezogen und oben mit dem tragenden Rahmen (1) verbunden sind, wird der statische Druck über den gesamten tragenden Rahmen (1) verteilt. Eine besondere Stabilisierung der Rahmenecken über der Rinnenebene (8) kann dadurch eingespart werden.

In einer besonders vorteilhaften Ausführung des Gewächshauses ist die Breite der Dachfläche (5) und der Lüftungsfläche (4) identisch. Wird die Breite für das erforderliche Eindeckmaterial von beispielsweise 1,5 m nicht überschritten, kann jedes verfügbare Eindeckmaterial (9) ohne zusätzliche Konfektionierung der Breite des Materials als Dach- bzw. Lüftungsfläche eingesetzt werden. Zudem sind besonders gleichformartige Materialien im Dach- und Lüftungsbereich bevorzugt, um den logistischen Aufwand und den Montageaufwand zu vermindern.

In einer vorteilhaften Ausgestaltung des Gewächshauses werden kuppelartige oder entlang der Hauslängsrichtung b tonnenartig geformte Eindeckmaterialien eingesetzt. Damit kann bei geringer Materialstärke eine sehr hohe Festigkeit und eine gesteigerte Transparenz erreicht werden. Es können dabei vorgeformte, lange Elemente oder aber ebene Materialien eingesetzt werden, die auf den Rahmenteilen der Lüftungsfläche und Dachfläche durch Spannvorrichtungen in die gewünschte Form gebogen werden. Bei Glas ist dies mit gehärtetem Glas möglich und wird durch die Biegung entlang der Querachse a des Gewächshauses bereits eingesetzt. Bei Kunststoffplatten hat der Einsatz in gekrümmten Rahmen den zusätzlichen Vorteil, dass die bei Kunststoffplatten übliche hohe Wärmedehnung über den Krümmungsradius kompensiert werden kann. Als Eindeckmaterialien können alle bekannten Materialien eingesetzt werden, wie z. B. Glas, Kunststoff oder Folien. Diese Materialien können mit Rahmen oder mit Spannbügeln befestigt werden. Die Spannbügel können dabei teleskopartig federnd ausgestaltet sein oder beispielsweise einseitig fixiert werden und an der anderen Seite verschiebbar ausgestaltet sein.

## Patentansprüche

1. Gewächshaus mit breitschiffartigen Dachkappen (6a), die durch einen im Dachbereich integrierten Gitterbinder (2) statisch stabilisiert sind,
**dadurch gekennzeichnet,**
**dass** ein Teil (1a) eines tragenden Rahmens (1), der sich oberhalb der Rinnenebene (8) befindet, außerhalb und der übrige Teil des tragenden Rahmens (1) innerhalb der Hüllfläche angeordnet ist.

2. Gewächshaus nach Anspruch 1,
**dadurch gekennzeichnet,**
**dass** die tragenden Rahmen (1) entlang der Querachse a des Gewächshauses angeordnet sind.

3. Gewächshaus nach einem der Ansprüche 1 bis 2,
**dadurch gekennzeichnet,**
**dass** die tragenden Rahmen (1) sowohl entlang der Querachse a des Gewächshauses als auch entlang der Längsachse b des Gewächshauses angeordnet sind.

4. Gewächshaus nach einem der Ansprüche 1 bis 3,
**dadurch gekennzeichnet,**
**dass** die Binderstiele (3) im Innenbereich und/oder im Außenwandbereich (7) über die Rinnenebene (8) gezogen und oben mit dem tragenden Rahmen (1) verbunden sind.

5. Gewächshaus nach einem der Ansprüche 1 bis 4,
**dadurch gekennzeichnet,**
**dass** die Breite des Eindeckmaterials der Dachfläche (5) und der Lüftungsfläche (4) identisch ist.

6. Gewächshaus nach einem der Ansprüche 1 bis 5,
**dadurch gekennzeichnet,**
**dass** es tonnenartig oder kuppelartig, entlang der Längsachse b gebogenes Eindeckmaterial (9) enthält.

7. Gewächshaus nach einem der Ansprüche 1 bis 6,
**dadurch gekennzeichnet,**
**dass** es rechteckig oder quadratisch kuppelartig, entlang der Längsachse b geformtes Eindeckmaterial (9) enthält.

8. Gewächshaus nach einem der Ansprüche 1 bis 7,
**dadurch gekennzeichnet,**
**dass** es Folien als Eindeckmaterial (9) enthält.

9. Gewächshaus nach Anspruch 8,
**dadurch gekennzeichnet,**
**dass** die Folien mit Spannbügeln tonnenförmig nach außen gespannt sind, wobei die Spannbügel teleskopartig federnd ausgestaltet sind.

10. Gewächshaus nach Anspruch 9,
**dadurch gekennzeichnet,**
**dass** die Folien mit Spannbügeln tonnenförmig nach außen gespannt sind, wobei die Spannbügel einseitig fixiert und an der anderen Seite verschiebbar ausgestaltet sind.

## Claims

1. Greenhouse with wide-aisle roof vaults (6a) which are statically stabilised by a lattice truss (2) integrated in the roof area, **characterised in that** a part (1 a) of a supporting frame (1) which is located above the gutter level (8) is arranged outside the enveloping surface, and the other part of the supporting frame (1) is arranged inside the enveloping surface.

2. Greenhouse according to Claim 1, **characterised in that** the supporting frames (1) are arranged along the transverse axis a of the greenhouse.

3. Greenhouse according to either of Claims 1 and 2, **characterised in that** the supporting frames (1) are arranged both along the transverse axis a of the greenhouse and along the longitudinal axis b of the greenhouse.

4. Greenhouse according to any one of Claims 1 to 3, **characterised in that** the truss struts (3) extend above of the gutter level (8) in the interior region and/or in the outer-wall region (7) and are connected at the top to the supporting frame (1).

5. Greenhouse according to any one of Claims 1 to 4, **characterised in that** the width of the covering material of the roof area (5) and of the ventilation area (4) is identical.

6. Greenhouse according to any one of Claims 1 to 5, **characterised in that** it includes covering material (9) curved along the longitudinal axis b in the manner of a barrel or a dome.

7. Greenhouse according to any one of Claims 1 to 6, **characterised in that** it includes covering material (9) configured in the form of rectangular or square dome-like elements along the longitudinal axis b.

8. Greenhouse according to any one of Claims 1 to 7, **characterised in that** it includes sheeting as covering material (9).

9. Greenhouse according to Claim 8, **characterised in that** the sheeting is tensioned outwardly in a barrel shape by means of tensioning members, the tensioning members being configured to be telescopically resilient.

10. Greenhouse according to Claim 9, **characterised in that** the sheeting is tensioned outwardly in a barrel shape by means of tensioning members, the tensioning members being fixed on one side and being configured displaceably on the other side.

## Revendications

1. Serre ayant des chaperons (6a) du type en bateau large, qui sont stabilisés statiquement par une ferme (2) à lattis intégrée à la région du toit,
**caractérisée**
**en ce qu'**une partie (1a) de l'ossature (1) porteuse qui se trouve au-dessus du plan (8) du chéneau est disposée à l'extérieur et l'autre partie de l'ossature (1) porteuse à l'intérieur de la surface enveloppante.

2. Serre suivant la revendication 1,
**caractérisée**
**en ce que** les ossatures (1) porteuses sont disposées le long de l'axe a transversal de la serre.

3. Serre suivant l'une des revendications 1 à 2,
**caractérisée**
**en ce que** les ossatures (1) porteuses sont disposées tant le long de l'axe a transversal de la serre qu'également le long de l'axe b longitudinal de la serre.

4. Serre suivant l'une des revendications 1 à 3,
**caractérisée**
**en ce que** les jambettes (3) de la ferme sont tirées à l'intérieur et/ou dans la partie (7) de paroi extérieure au-dessus du plan (8) de chéneau et sont reliées en haut à l'ossature (1) porteuse.

5. Serre suivant l'une des revendications 1 à 4,
**caractérisée**
**en ce que** les largeurs du matériau de recouvrement de la surface (5) du toit et de la surface (4) d'aération sont les mêmes.

6. Serre suivant l'une des revendications 1 à 5,
**caractérisée**
**en ce qu'**elle comporte du matériau (9) de recouvrement courbé en forme de tonneau ou en forme de coupelle le long de l'axe b longitudinal.

7. Serre suivant l'une des revendications 1 à 6,
**caractérisée**
**en ce qu'**elle comporte du matériau (9) de recouvrement en forme de coupelle rectangulaire ou carrée le long de l'axe b longitudinal.

8. Serre suivant l'une des revendications 1 à 7,
**caractérisée**
**en ce qu'**elle contient des feuilles comme matériau (9) de recouvrement.

9. Serre suivant la revendication 8,
**caractérisée**
**en ce que** les feuilles sont tendues vers l'extérieur en forme de tonneau par des étriers de tension, les étriers de tension étant réalisés à suspension télescopique.

10. Serre suivant la revendication 9,
**caractérisée**
**en ce que** les feuilles sont tendues vers l'extérieur en forme de tonneau par des étriers de tension, les étriers de tension étant immobilisés d'un côté et étant coulissants de l'autre côté.
